# EUROPEAN PATENT APPLICATION

(11) **EP 4 040 362 A1**
(43) Date of publication of application: **10.08.2022**
(21) Application number: 20872861.8
(22) Date of filing: 30.09.2020
(51) Int. Cl.: G06Q 20/32, G06Q 30/06, G07G 1/01, G07G 1/14

(54) **USER PAYMENT TERMINAL, PAYMENT SYSTEM, AND PROGRAM IMPLEMENTED ON THESE**

(30) Priority: 30.09.2019 JP 2019179984
(71) Applicant: Fujisawa, Kazunori, Tokyo 160-8486 (JP)
(72) Inventor: Fujisawa, Kazunori, Tokyo 160-8486 (JP)
(74) Representative: Grünecker Patent- und Rechtsanwälte PartG mbB
(86) International application number: PCT/JP2020/037098
(87) International publication number: WO 2021/065994

(57) **Abstract**

To provide a payment-purpose user terminal, a payment system, and a computer program executed at the terminal and the system, which improve convenience for a customer (user) at checkout (in particular, duration of money amount inputting of products). A payment-purpose user terminal capable of communicating payment information with a cash register terminal that is connectable to a server includes: an operation input device configured to receive an operation input by a user; a user communication device configured to communicate with the server or the cash register terminal; and a user control device configured to control the operation input device and the user communication device, and the user control device receives selection of a payment method through the operation input device in duration of money amount inputting of products at the cash register terminal.

## Description

### Technical Field

The present invention relates to a payment-purpose user terminal used for payment at a shop, a payment system using the payment-purpose user terminal, and a computer program executed at the terminal and the system.

### Background Art

Recently, use of a portable terminal (payment-purpose user terminal; "payment-purpose" means that the terminal does not necessarily need to be a dedicated terminal but only needs to be a terminal that can be used for payment, and thus payment-purpose user terminal is also simply referred to as "user terminal" or "customer terminal") such as a smartphone for payment at a shop has been rapidly spreading.

For example, a POS data distribution system in which POS data is transmitted to a portable terminal after payment has been disclosed (Patent Literature 1).

Specifically, Patent Literature 1 discloses a POS data distribution system including: a reception means disposed at a cash register terminal in a shop and configured to receive an individual ID from a portable terminal of a customer when payment is made for a product by the customer; a POS data management server connected to the cash register terminal and configured to store POS data including selling date and time, a product name, and price information in association with the individual ID; and a customer's reception terminal connected to the POS data management server through a network and configured to receive POS data corresponding to the individual ID from the POS data management server.

In addition, an electronic receipt issue system configured to issue an electronic receipt to a customer terminal without using private information at checkout has been disclosed (Patent Literature 2).

Specifically, Patent Literature 2 discloses a configuration including: a receipt data transmission unit configured to transmit receipt data, a checkout terminal ID, and checkout date and time information to a server when transaction checkout is performed at a checkout terminal; a checkout terminal ID acquisition unit configured to acquire a checkout terminal ID at a customer terminal after the checkout is completed; a receipt issue request unit configured to transmit a receipt issue request including a checkout terminal ID and ID acquisition date and time information to the server; and an electronic receipt issuing unit configured to extract, from a receipt data storage unit, receipt data having a matching checkout terminal ID that is acquired within a predetermined time since checkout completion, and with the configuration, it is possible to specify receipt data of a customer without using private information.

In addition, use of a normal cellular phone as a POS terminal has been disclosed (Patent Literature 3).

Specifically, Patent Literature 3 discloses a POS system including: a cellular phone POS terminal that downloads a POS application program, performs checkout processing based on the POS application program, and can be used as a normal cellular phone; and a system server configured to provide the POS application program to the cellular phone POS terminal through wireless communication and receive payment for the POS application program.

### Citation List

### Patent Literature

Patent Literature 1: Japanese Patent Laid-Open No. 2006-244197
Patent Literature 2: Japanese Patent Laid-Open No. 2016-126761
Patent Literature 3: Japanese Patent Laid-Open No. 2004-164195

### Summary of Invention

### Technical Problem

However, the conventional technologies have room for improvement on convenience for a customer (user) at checkout (including the duration of money amount inputting of products).

### Solution to Problem

A payment-purpose user terminal according to an embodiment of the present invention is capable of communicating payment information with a cash register terminal that is connectable to a server and includes: an operation input device configured to receive an operation input by a user; a user communication device configured to communicate with the server or the cash register terminal; and a user control device configured to control the operation input device and the user communication device, and the user control device receives selection of a payment method through the operation input device in duration of money amount inputting of products at the cash register terminal.

According to the present embodiment, it is possible to select a payment method by using the operation input device in duration of money amount inputting of products at the cash register terminal. Thus, it is possible to select a payment method at an optional timing on the user side, which improves freedom of the user.

The "duration of money amount inputting of products" includes, for example, duration before a product is input after another product is input when a plurality of products are input at the cash register terminal. The expression "at checkout" includes a timing before money amount inputting of the first product starts and a timing after money amount inputting of the last product ends. Thus, it may be possible to select a payment method by using the operation input device at the timing before money amount inputting of the first product starts or the timing after money amount inputting of the last product ends in addition to the duration of money amount inputting of products.

A payment method may include, for example, any of electronic money payment, credit card payment, and use of points. In this case, electronic money payment or credit card payment may be combined with use of points. All or some of the points may be used.

When the payment method is selected through the operation input device in the duration of money amount inputting of products at the cash register terminal, the user control device may receive information of each input product from the cash register terminal and display the received information on the user display device.

According to the present embodiment, information of each input product is displayed on the user display device in the duration of money amount inputting of products at the cash register terminal. Thus, the user can check information of each input product, for example, when the user has missed display on the cash register terminal (including a case in which the user desires to go back and view contents of already processed products in past or the like), when the cash register terminal has no display device facing the user, when the same product is wrongly input twice, or when discount to be applied is not applied. Accordingly, it is possible to improve freedom and reliability of user check.

Since information of each input product is displayed on the user display device at a timing when a payment method is selected, it is possible to start product information display without discomfort felt by the user.

Product information displayed on the user display device in the duration of money amount inputting of products at the cash register terminal may include information of all input products. Accordingly, it is possible to check information of an optional product when the user desires to go back and view information of input products.

The user communication device may receive information of each input product through communication with a cash register communication device of the cash register terminal. Accordingly, for example, when sufficient network communication capacity cannot be ensured, it can be expected to swiftly display information of each input product on the user display device as compared to a case of reception through the management server.

A payment-purpose user terminal according to an embodiment of the present invention is capable of communicating payment information with a cash register terminal that is connectable to a server and includes: an operation input device configured to receive an operation input by a user; a user communication device configured to communicate with the server or the cash register terminal; and a user control device configured to control the operation input device and the user communication device, and the user control device receives information of each input product from the server or the cash register terminal and displays the received information on the user display device in duration of money amount inputting of products at the cash register terminal.

According to the present embodiment, information of each input product is displayed on the user display device in duration of money amount inputting of products at the cash register terminal. Thus, the user can check information of each input product, for example, when the user has missed display on the cash register terminal (including a case in which the user desires to go back and view contents of already processed products in past or the like), when the cash register terminal has no display device facing the user, when the same product is wrongly input twice, or when discount to be applied is not applied. Accordingly, it is possible to improve freedom and reliability of user check.

A payment system according to an embodiment of the present invention includes: a cash register terminal that is connectable to a server; and a payment-purpose user terminal, the cash register terminal includes: a product input device configured to individually input a product bought by a user; a payment information calculation device configured to calculate a total amount by adding a price of each input product; a cash register communication device configured to communicate with the payment-purpose user terminal; a cash register display device disposed toward the user; and a cash register control device configured to control the product input device, the payment information calculation device, the cash register communication device, and the cash register display device, the payment-purpose user terminal includes: an operation input device configured to receive an operation input by the user; a user communication device configured to communicate with the server or the cash register communication device; and a user control device configured to control the operation input device and the user communication device, and the user control device receives selection of a payment method through the operation input device and notifies the server or the cash register terminal of the selection duration of money amount inputting of products at the cash register terminal.

A computer program according to an embodiment of the present invention is a computer program configured to operate on a payment-purpose user terminal including an operation input device, a user communication device, and a user control device and capable of communicating payment information with a cash register terminal, the operation input device being configured to receive an operation input by a user, the user communication device being configured to communicate with the cash register terminal, the user control device being configured to control the operation input device and the user communication device, and the user control device executes a step of receiving selection of a payment method through the operation input device duration of money amount inputting of products at the cash register terminal.

A computer program according to an embodiment of the present invention is a computer program configured to operate on a payment system including a cash register terminal and a payment-purpose user terminal, the cash register terminal including a product input device, a payment information calculation device, a cash register communication device, a cash register display device, and a cash register control device, the product input device being configured to individually input a product bought by a user, the payment information calculation device being configured to calculate a total amount by adding a price of each input product, the cash register communication device being configured to communicate with the payment-purpose user terminal, the cash register display device being disposed toward the user, the cash register control device being configured to control the product input device, the payment information calculation device, the cash register communication device, and the cash register display device, the payment-purpose user terminal including an operation input device, a user communication device, and a user control device, the operation input device being configured to receive an operation input by the user, the user communication device being configured to communicate with the cash register communication device, the user control device being configured to control the operation input device and the user communication device, and the user control device executes a step of receiving selection of a payment method through the operation input device duration of money amount inputting of products at the cash register terminal.

### Advantageous Effect of Invention

For example, a payment-purpose user terminal according to an embodiment of the present invention provides an advantageous effect of improving convenience for a customer (user) at checkout (including the duration of money amount inputting of a product).

### Brief Description of Drawings

[Figure 1] Figure 1 is an explanatory diagram for description of an exemplary entire configuration of a payment system according to an embodiment of the present invention.
[Figure 2] Figure 2 is an explanatory diagram for description of an exterior configuration of a cash register terminal in the payment system according to an embodiment of the present invention.
[Figure 3] Figure 3 is an explanatory diagram for description of functional blocks of a cash register terminal in the payment system according to an embodiment of the present invention.
[Figure 4] Figure 4 is an explanatory diagram for description of an exterior configuration of a user terminal in the payment system according to an embodiment of the present invention.
[Figure 5] Figure 5 is an explanatory diagram for description of functional blocks of the user terminal in the payment system according to an embodiment of the present invention.
[Figure 6] Figure 6 is an explanatory diagram for description of functional blocks of a payment management server in the payment system according to an embodiment of the present invention.
[Figure 7] Figure 7 is an explanatory diagram for description of exemplary operation of the payment system according to an embodiment of the present invention.
[Figure 8] Figure 8 is a flowchart for description of an exemplary process of operation at the cash register terminal in the payment system according to an embodiment of the present invention.
[Figure 9] Figure 9 is an explanatory diagram for description of an exemplary screen of the user terminal in the payment system according to an embodiment of the present invention.
[Figure 10] Figure 10 is a flowchart for description of a detailed exemplary process of operation at the cash register terminal in the payment system according to an embodiment of the present invention.
[Figure 11] Figure 11 is an explanatory diagram for description of an exemplary screen of the cash register terminal in the payment system according to an embodiment of the present invention.
[Figure 12] Figure 12 is an explanatory diagram for description of another exemplary screen of the user terminal in the payment system according to an embodiment of the present invention.

### Description of Embodiments

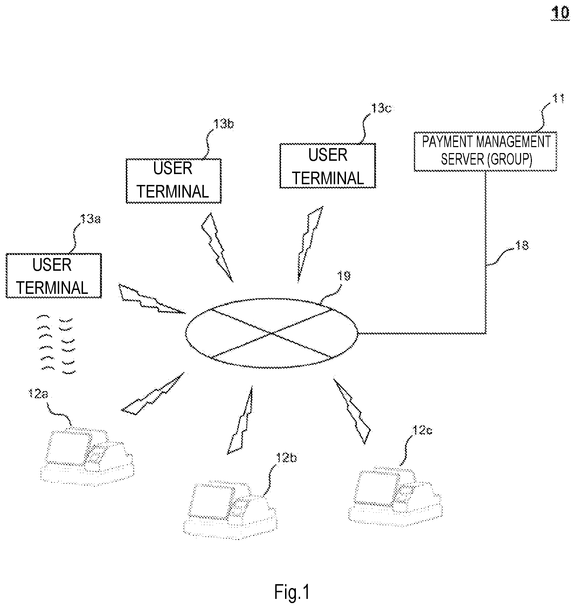

A payment system according to an embodiment of the present invention will be described below in detail with reference to the accompanying drawings. Figure 1 illustrates an exemplary entire configuration of the payment system according to an embodiment of the present invention. As illustrated in Figure 1, this payment system 10 includes, as a minimum configuration, a payment management server (group) 11, one or more cash register terminals 12a to 12c, and various information processing devices (Figure 1 illustrates user terminals 13a to 13c as, for example, a smartphone, a cellular phone, a portable information terminal, or a tablet terminal; hereinafter also collectively referred to as "user terminals") used by a user, and the server (group), the cash register terminals, and the various terminals are connected to one another to perform mutual communication through dedicated networks and public networks (reference number 18 denotes a wired network) such as the Internet as illustrated in Figure 1. In addition, bilateral communication using wireless short-distance communication is possible between each cash register terminal and each user terminal. Note that the user terminals 13a to 13c may directly communicate with the payment management server (group) 11. In this case, direct communication may be started through authentication processing through a cash register terminal beforehand.

Each network may be wired or wireless, and the cash register terminals (information terminals having a communication function therein) 12a to 12c and the user terminals 13a and 13c are wirelessly connected to the Internet 19 through, for example, a non-illustrated base station or wireless router and are further connected to the payment management server (group) 11 through the network 18 to perform mutual communication.

User terminals at the timing of application of the present disclosure often have processing performance (such as communication processing speed and image processing performance) equivalent to that of a PC and can be called small-sized computers.

A computer program or software necessary for performing the present invention is normally installed or stored in a HDD, an SSD, or the like at a storage unit of a terminal, and when needed at execution, the computer program or software is read onto a memory in the storage unit as a software module corresponding to the entire or partial computer program or software and is executed through computation at a CPU.

Note that the computation execution does not necessarily need to be performed at a central processing unit (CPU) but may be performed at an auxiliary arithmetic device such as a non-illustrated digital signal processor (DSP).

The payment management server 11 may basically employ the hardware configuration of a PC. Note that, although the present invention is not limited thereto, the payment management server 11 may increase hardware specifications as necessary by employing a configuration in which a plurality of PCs are actuated in parallel to process large-volume data.

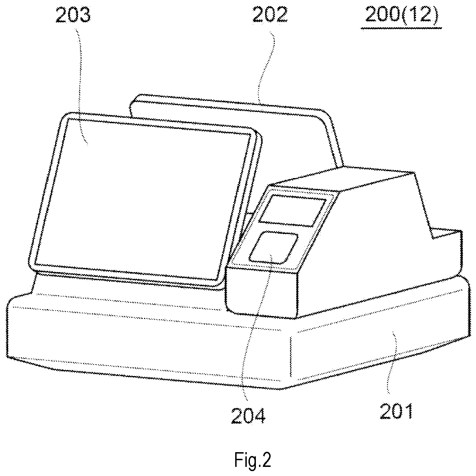

Figure 2 illustrates an exterior configuration of a cash register terminal according to an embodiment of the present invention. In Figure 2, this cash register terminal 200 (corresponding to 12a or the like in Figure 1) is a terminal (POS cash register) used for point of sales (POS) and includes a casing unit 201, a store clerk side display 202, a customer side display 203, and a payment-purpose communication unit 204. The store clerk side display 202 and the customer side display 203 are each typically configured as a liquid crystal display (LCD) and can display various information such as characters and images. The store clerk side display 202 faces on a store clerk side, and the customer side display 203 faces on a customer side. The customer side display 203 is used for payment method selection and the like as described later.

The displays 202 and 203 in an embodiment each include a multi-touch input panel, and the coordinates of a touch input position on the touch input panel are transmitted to a processing system (CPU) of the cash register terminal 200 through an input device interface (not illustrated) and processed. Although the present invention is not limited thereto, the multi-touch input panel and can simultaneously sense a plurality of contact points on the panel. This sensing (sensor) can be achieved by various methods and is not limited to a contact sensor, and for example, an optical sensor may be used to extract an instruction point on the panel. The sensor may be a contact sensor, an optical sensor, or a capacitive sensor configured to sense contact with human skin.

The payment-purpose communication unit 204 in an embodiment is a non-contact IC card reader/writer (a writer function may be omitted). In an embodiment, the payment-purpose communication unit 204 generates magnetic field, and data such as electronic money information can be communicated through wireless communication when a card is held over the magnetic field.

Although not illustrated in Figure 2, the cash register terminal 200 may include a bar code reader or a two-dimensional code reader. The bar code reader or the two-dimensional code reader includes an image sensor (such as a CMOS) configured to read a bar code or two-dimensional code attached to a product.

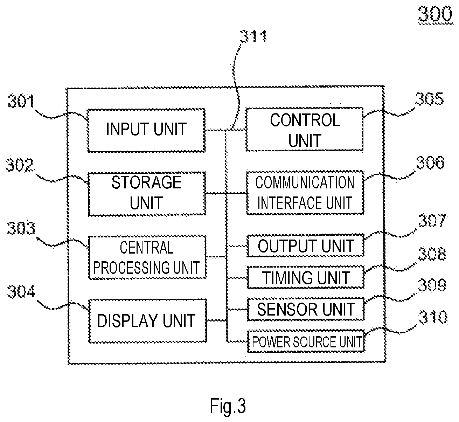

Figure 3 exemplarily illustrates a functional block diagram of hardware components serving as a system (hereinafter also referred to as a "cash register terminal system") configured to perform information processing in a cash register terminal 12 according to an embodiment of the present invention. Operation of the cash register terminal 12 is achieved by individual operation of each hardware component described below and cooperative operation of the hardware components.

In Figure 3, a cash register terminal system 300 as the entire hardware block includes, as roughly classified components: an input unit 301 constituted by a non-illustrated hardware button, a multi-touch input panel provided on a display, a reader unit in the payment-purpose communication unit 204, and the like; a storage unit 302 constituted by a hard disk, a RAM, a ROM, and/or the like for storing computer programs, data, and the like; a central processing unit 303 constituted by a CPU configured to perform various numerical calculations and logical operations based on computer programs; a display unit 304 constituted by the store clerk side display 202, the customer side display 203, and the like; a control unit 305 for controlling chips, electrical systems, and the like; a communication interface unit 306 constituted by a communication interface for accessing to the payment management server through a slot for accessing to the Internet, a port for performing optical communication, a dedicated wireless network, and/or the like; an output unit 307 including a writer unit in the payment-purpose communication unit 204, a speaker, and the like; a timing unit 308 for measuring time and the like; a sensor unit 309 including the bar code reader; and a power source unit 310 for supplying power to each module in the device, and these modules are connected to each other through a communication bus or a power supply line (for sake of simplicity, collectively illustrated as a wire 311 in which each line is partitioned as appropriate in Figure 3) as appropriate when needed.

Note that the bar code reader included in the sensor unit 309 includes an image sensor for reading a bar code attached to a non-illustrated product. A signal sensed by, for example, the image sensor such as a CMOS is processed as input information at the input unit 301.

A computer program or software necessary for performing the present invention is normally installed or stored in a hard disk or the like included in the storage unit 302, and when needed at execution, the computer program or software is read onto a memory in the storage unit 302 as a software module corresponding to the entire or partial computer program or software and is executed through computation at the CPU 303.

Note that the computation execution does not necessarily need to be performed at the central processing unit 303 such as a CPU but may be performed at an auxiliary arithmetic device such as a non-illustrated digital signal processor (DSP).

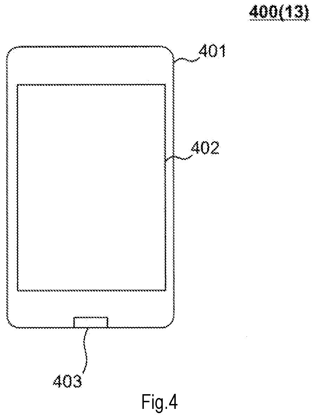

Figure 4 illustrates an exterior configuration of a smartphone (or tablet terminal; description is made on the smartphone) as a user terminal (information processing device) according to an embodiment of the present invention. In Figure 4, this user terminal (smartphone) 400 (corresponding to a user terminal 13 in Figure 1) includes a casing unit 401, a display 402, and a hardware button 403 provided at a lower central part of the casing unit 401. The display 402 is typically configured as a liquid crystal display (LCD) or the like and can display various information such as characters and images. A menu button or a software keyboard may be displayed on the display 402 and touched with a finger, a touch pen (not illustrated), or the like to perform an instruction (command) on the smartphone 400. Thus, the above-described hardware button 403 is not an essential constituent component but, for sake description of the present invention, is mounted as a button having a certain function. The hardware button 403 may be replaced with a menu button displayed on part of the display 402.

The display 402 includes a multi-touch input panel, and the coordinates of a touch input position on the touch input panel is transmitted to a processing system (CPU) of the smartphone 400 through the input device interface (not illustrated) and processed. The multi-touch input panel can simultaneously sense a plurality of contact points on the panel. This sensing (sensor) can be achieved by various methods and is not limited to a contact sensor, and for example, an optical sensor may be used to extract an instruction point on the panel. The sensor may be a contact sensor, an optical sensor, or a capacitive sensor configured to sense contact with human skin.

Although not illustrated in Figure 4, the smartphone 400 may include a microphone and a speaker. In this case, for example, user's voice collected by the microphone can be determined as an input command. In addition, although not illustrated in Figure 4, a camera device such as a CMOS is mounted at the back surface of the smartphone 400 or the like.

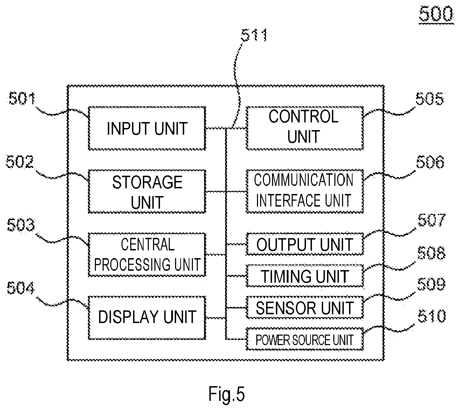

Figure 5 exemplarily illustrates a functional block diagram of hardware components included in the smartphone 400 according to an embodiment of the present invention. Operation of the smartphone 400 is achieved by individual operation of each hardware component described below and cooperative operation of the hardware components.

In Figure 5, a smartphone 500 as the entire hardware block includes, as roughly classified components: an input unit 501 constituted by the hardware button 403 in Figure 4, the multi-touch input panel provided to the display 402, a microphone, and the like; a storage unit 502 constituted by a hard disk, a RAM, a ROM, and/or the like for storing computer programs, data, and the like; a central processing unit 503 constituted by a CPU configured to perform various numerical calculations and logical operations based on computer programs; a display unit 504 constituted by the display 402 and the like; a control unit 505 for controlling chips, electrical systems, and the like; a communication interface unit 506 constituted by a slot for accessing to the Internet, a port for performing optical communication, and a communication interface; an output unit 507 such as a speaker or vibration unit; a timing unit 508 for measuring time and the like; a sensor unit 509 constituted by an image sensor such as a CMOS; and a power source unit 510 for supplying power to each module in the device, and these modules are connected to each other through a communication bus or a power supply line (for sake of simplicity, collectively illustrated as a wire 511 in which each line is partitioned as appropriate in Figure 5) as appropriate when needed.

Note that the sensor unit 509 includes a GPS sensor module for specifying the position of the smartphone 500 (for example, 13a in Figure 1). A signal sensed by the image sensor such as a CMOS included in the sensor unit 509 is processed as input information at the input unit 501.

A computer program or software necessary for performing the present invention is normally installed or stored in a hard disk or the like included in the storage unit 502, and when needed at execution, the computer program or software is read onto a memory in the storage unit 502 as a software module corresponding to the entire or partial computer program or software and is executed through computation at the CPU 503.

Note that the computation execution does not necessarily need to be performed at the central processing unit 503 such as a CPU but may be performed at an auxiliary arithmetic device such as a non-illustrated digital signal processor (DSP).

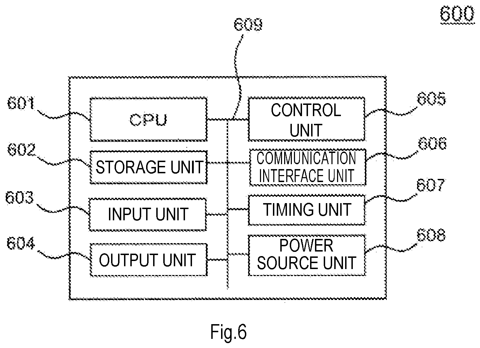

Figure 6 illustrates a functional block diagram of the payment management server (information management server) in the payment system according to an embodiment of the present invention. For example, operation of the payment management server is achieved by individual operation of each hardware component described below and cooperative operation of software components and the hardware components.

In Figure 6, a payment management server 600 as the entire hardware block includes, as roughly classified components: a CPU 601 for performing various kinds of comparison and arithmetic processing; a storage unit 602 such as a RAM, a ROM, or a flash memory; an input unit 603 such as a keyboard or a pointing device; an output unit 604 such as a display or a speaker; a control unit 605 for various kinds of signal control; a communication (interface) unit 606 (for wireless or wired communication); a timing unit 607 for measuring time and the like; and a power source unit 608.

These modules are connected to each other through a communication bus or a power supply line (for sake of simplicity, collectively illustrated as a wire 609 in which each line is partitioned as appropriate in Figure 6) as appropriate when needed.

A computer program or software executed at the payment management server 600 necessary for performing the present invention is normally installed or stored in a hard disk, a solid state drive (SSD), a flash memory, or the like included in the storage unit 602, and when needed at execution, the computer program or software is read onto a memory in the storage unit 602 as a software module corresponding to the entire or partial computer program or software and is executed through computation at the CPU 601.

Note that the computation execution does not necessarily need to be performed at a central processing unit such as the CPU 601 but may be performed at an auxiliary arithmetic device such as a non-illustrated digital signal processor (DSP).

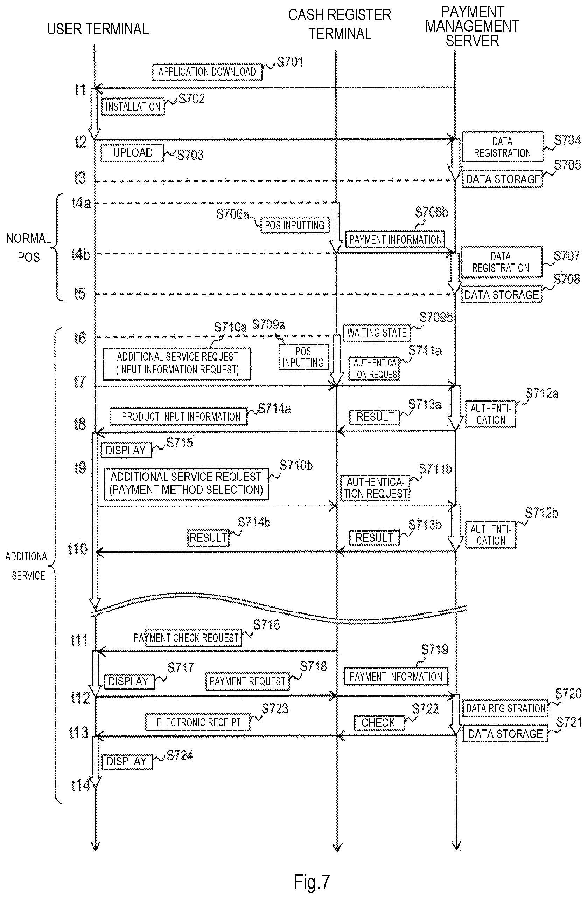

Subsequently, operation of the payment system or information processing device (user terminal) in an embodiment of the present invention will be described below with reference to an operation process or flowchart in Figure 7.

Figure 7 schematically illustrates the entire operation process of the payment system in an embodiment of the present invention. In Figure 7, "user terminal" is the information processing device and corresponds to any of the user terminals 13a to 13c in Figure 1, and "cash register terminal" corresponds to any of the cash register terminals 12a to 12c in Figure 1. In addition, "payment management server" corresponds to the payment management server (group) 11 in Figure 1. In Figure 7, t1 to t14 indicate a temporally sequential flow, and operations and processes to be described later are temporally performed.

First at time t1, the user (customer) downloads, from the payment management server (or non-illustrated application provision server) through the user terminal, a software application for operating the own user terminal as an information processing device according to the present invention (step S701). The software application is client software for processing part of a computer program according to the present invention. Then, the downloaded software application is installed on the user terminal (step S702). In this case, when needed as user registration, the full name (nickname) of the user as well as account information such as examples in a table below may be transmitted (uploaded) to the payment management server and registered and stored from the user terminal (steps S703 and S704 at time t2).

**[Table 1]**

| Name (nickname) | Member number (user ID) | Email address (mobile phone number) | Sex | Age (age range) | Payment information |
|---|---|---|---|---|---|
| | | | | | |

In the table above, for example, bank account information for electronic money payment, a credit card number for credit payment, or the like may be registered as "payment information" in advance (in this case, non-illustrated personal details or the like are registered as well). Other information related to payment may be registered.

The above-described data items are stored as user data at the payment management server (step S705 at time t3) .

Subsequently at times t4a to t5, the normal POS processing in which the cash register terminal reports transaction information to the payment management server is performed when the customer does not use the user terminal. Specifically, POS inputting is performed at time t4a (step S706a), and when one payment processing (total money amount payment processing upon inputting of one or more products and the like; hereinafter also simply referred to as "payment") related to the customer is completed at the cash register terminal, the cash register terminal transmits payment information related to the payment to the payment management server (step S706b at time t4b). The payment information includes, for example, identification information (cash register ID) of the cash register terminal, a paid money amount, the names of sold products, and the number of sold products. Having received the payment information from the cash register terminal, the payment management server registers and stores the payment information in a database (steps S707 and S708 at times t4b to t5). The payment information communication thus performed is normal POS processing. The normal POS processing is executed at each payment completion at the cash register terminal although only one execution is illustrated in Figure 7.

At times t6 to t14, additional service processing of providing any additional service to the user using the user terminal is performed. The additional services include a payment method selection service with which a payment method can be selected (or changed) in the duration of money amount inputting or reading of a plurality of products at the cash register terminal, an input information display service with which the input information can be displayed on the user terminal in the duration of money amount inputting or reading of a plurality of products, and the above-described normal POS processing.

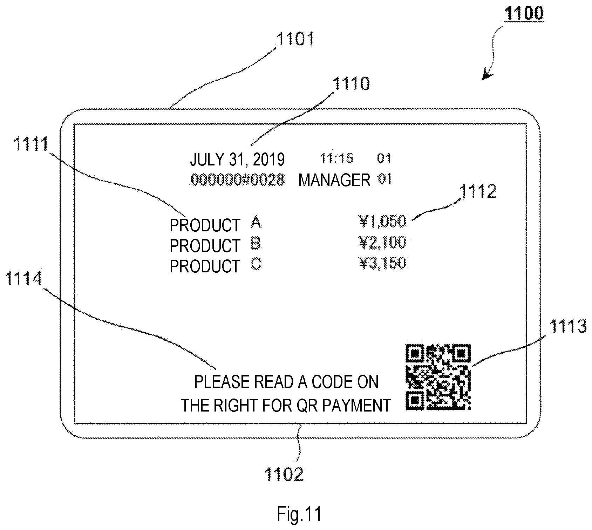

Specifically, at time t6, POS inputting is started (step S709a). The cash register terminal with which payment is performed becomes a waiting state in which the payment method selection service and the input information display service can be started upon a request from the user terminal (step S709b). In the waiting state, a two-dimensional code such as a QR code (registered trademark) or a bar code is displayed on the customer side display of the cash register terminal (for example, 1113 in Figure 11). At time t7, when the two-dimensional code is read while the software application is activated on the user terminal, a start request command for the additional service processing is transmitted to the cash register terminal (step S710a). Thus, the two-dimensional code includes information (for example, a command to permit proximity communication, a communication message secret code optionally set when proximity communication is performed, or a link to a particular web page provided at the payment management server) related to conditions for the user terminal to communicate with the cash register terminal and/or the payment management server.

Note that, in an embodiment of the present invention, it may be determined that two-dimensional payment is selected as a payment method by the user when the above-described two-dimensional code is read. In this case, the user can select a payment method in the duration of money amount inputting of products (processing in this case will be described later at steps S710b to S714b).

Having received the start request command, the cash register terminal transmits an authentication request command including identification information (user terminal ID) and authentication information of the user terminal, which are included in the start request command, to the payment management server, and checks whether the additional service processing is allowed to be performed with the cash register terminal (step S711a). Having received the authentication request command, the payment management server performs authentication by using the user terminal ID, the authentication information, the like included in the authentication request command and determines whether the additional service processing is allowed to be performed with the cash register terminal (or with the payment management server) (step S712a). Then at time t8, the payment management server transmits a result of the determination to the cash register terminal (step S713a).

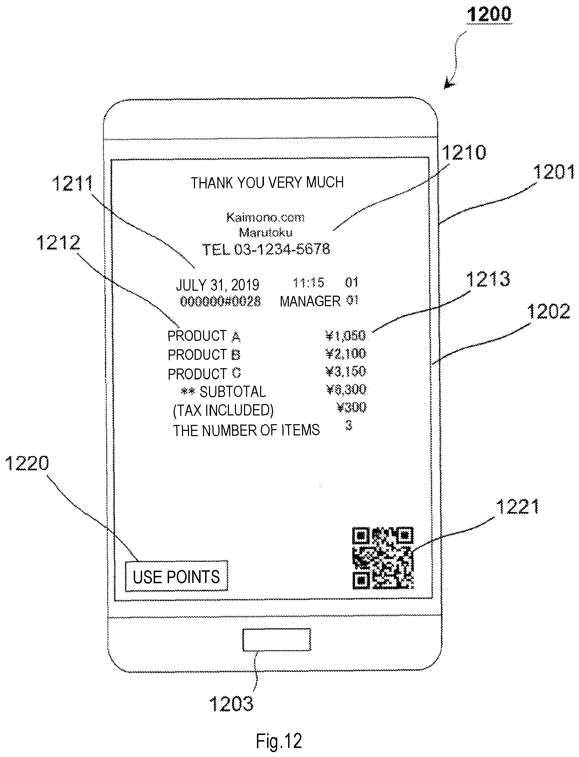

When a flag indicating the result of the determination has a value (for example, "1") indicating "additional service start OK", the cash register terminal transmits product input information to the user terminal (step S714a at time t8). Then, having received the product input information, the user terminal displays the product input information on the display (402 in Figure 4) of the user terminal (step S715 after time t8; refer to Figure 12 for a user terminal screen). Accordingly, the user can check, on the user terminal, the product input information in the duration of money amount inputting. The product input information is sequentially updated or added and is presented on the display of the user terminal as POS inputting processing proceeds at the cash register terminal. In an embodiment, the product input information can be checked on the display of the user terminal in substantially synchronization with input processing at the cash register terminal.

In another embodiment, the product input information is sequentially transmitted from the cash register terminal to the user terminal at a predetermined timing, and display contents can be updated on the display of the user terminal at each transmission. The predetermined timing may be, for example, a timing at which a new product is input, or an update period of a certain duration (for example, in the period of 0.5 seconds). In an embodiment, the transmission of the product input information from the cash register terminal to the user terminal is performed until product inputting is completed at the cash register terminal. In an embodiment, the completion of product inputting is processed, for example, when a store clerk presses an input completion button on the cash register terminal.

Subsequently at time t9, a start request command for the additional service processing is transmitted to the cash register terminal by reading a two-dimensional code related to payment code selection, the two-dimensional code being assumed to be displayed on the customer side display (step S710b). The two-dimensional code includes information (for example, a command to permit proximity communication, a communication message secret code optionally set when proximity communication is performed, or a link to a particular web page provided at the payment management server) related to conditions for the user terminal to communicate with the cash register terminal and/or the payment management server.

Then, when the above-described two-dimensional code is read at step S710b, it is determined that the two-dimensional payment is selected as a payment method by the user.

Having received the start request command, the cash register terminal transmits an authentication request command including identification information (user terminal ID) and authentication information of the user terminal, which are included in the start request command, to the payment management server and checks whether the additional service processing is allowed to be performed with the cash register terminal (step S711b). Having received the authentication request command, the payment management server performs authentication by using the user terminal ID, the authentication information, and the like included in the authentication request command and determines whether the additional service processing is allowed to be performed with the cash register terminal (or with the payment management server) (step S712b). Then at time t10, the payment management server transmits a result of the determination to the cash register terminal (step S713b).

When the result of the determination indicates "additional service start OK", the cash register terminal transmits the product input information to the user terminal (step S714b at time t10). Then, on the user terminal, payment method selection or change becomes possible through non-illustrated screen transition or the like.

As described above, in an embodiment of the present invention, reading of a two-dimensional code (1113 in Figure 11) means request for synchronization display of the product input information on the user terminal by the user or means selection of the two-dimensional payment as a payment method by the user (the kind of a two-dimensional code displayed at 1113 in Figure 11 is changed as appropriate).

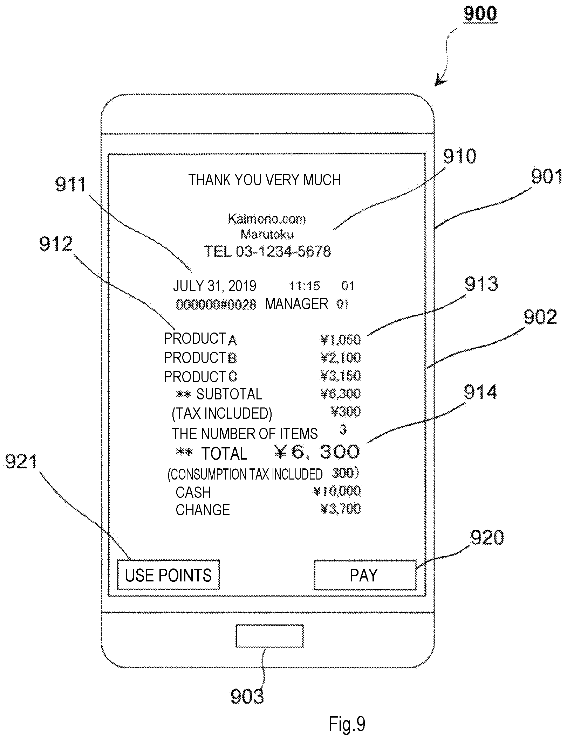

Then, in an embodiment of the present invention, when product inputting is completed while the two-dimensional payment is selected, the cash register terminal transmits a payment check request command to the user terminal at time t11 (step S716). Having received the payment check request command, the user terminal displays a payment check screen (Figure 9) on the user display (402 in Figure 4) (step S717). Note that a use-point button (921 in Figure 9) on the payment check screen can be selected to select use of points.

At time t12, when the user presses a pay button (920 in Figure 9) on the payment check screen, the user terminal transmits a payment request command to the cash register terminal (step S718). Having received the payment request command, the cash register terminal transmits payment information to the payment management server (step S719). The transmission of the payment information is same as in the normal POS processing. Having received the payment information, the payment management server registers and stores the payment information (steps S720 and S721) and then transmits a reception check to the cash register terminal (step S722).

Having received the reception check from the payment management server, the cash register terminal transmits a non-illustrated electronic receipt to the user terminal (step S723). Having received the electronic receipt, the user terminal displays the contents of the electronic receipt on the user display device (step S724 at time t13 to t14). Note that the transmission of the electronic receipt from the cash register terminal to the user terminal may be performed before the transmission of the payment information from the cash register terminal to the payment management server or may be performed simultaneously with the transmission.

As hinted by the operation process described with reference to Figure 7, the payment system according to the present invention is not limited to a form in which the user terminal and the cash register terminal constantly communicate with each other through proximity communication or the like, but the user terminal may be controlled to communicate with the payment management server (group) through the cash register terminal, the user terminal may be controlled to communicate the cash register terminal through the payment management server (group), or the user terminal may be controlled to directly communicate with the payment management server (group). In an embodiment, the two-dimensional code 1113 displayed on the customer side display of the cash register terminal may be used as a trigger upon which the user terminal communicates with the payment management server (group).

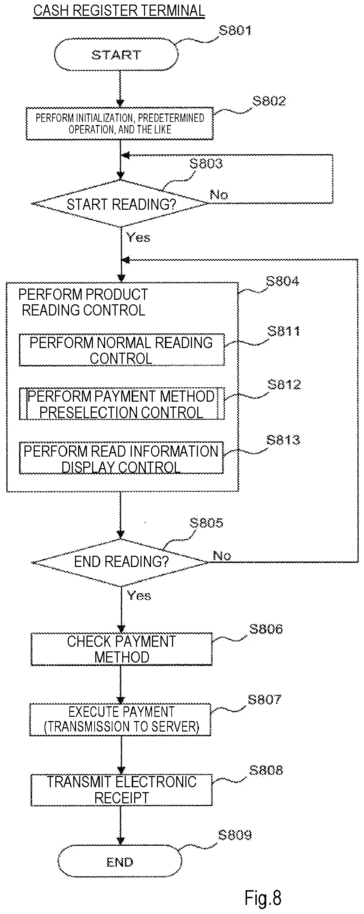

Figure 8 is a flowchart illustrating more specific processing at the cash register terminal in the processing in Figure 7. However, the flowchart illustrated in Figure 8 is not limited to the process illustrated in Figure 7 (some part illustrates details of Figure 7 and some other part illustrates a processing variation). At step S801, when the cash register terminal according to an embodiment of the present invention is powered on and enters a non-illustrated payment mode through software activation, necessary initialization, and predetermined operation (step S802), the process proceeds to step S803. At step S803, the cash register terminal determines whether to start product reading. Although the present invention is not limited thereto, the determination is performed based on, for example, whether the bar code of the first product is read by the bar code reader in an embodiment. When product reading is to be started (Yes at step S803), the process proceeds to step S804. When product reading is not to be started (No at step S803), the process returns to step S803 (a loop with No at step S803 corresponds to what is called a waiting state).

At step S804, the cash register terminal according to an embodiment of the present invention executes product reading control to perform product reading. In an embodiment, the product reading control includes an optional combination of normal reading control (step S811), payment method preselection control (step S812), and read information display control (step S813).

The normal reading control (step S811) is a control step in which the above-described normal POS processing (for example, step S706a in Figure 7) is executed, and in an embodiment, each time the bar code of a product is read by the bar code reader, the read product is specified and the name, price, and the like of the product are displayed on the store clerk side display and the customer side display. In addition, the price of each read product is added to a total amount, and the total amount is used as a total amount to be paid when the reading has ended.

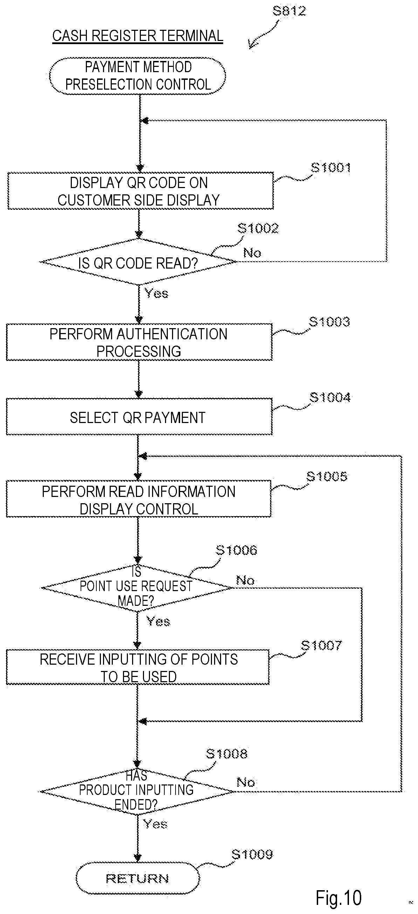

The payment method preselection control (step S812) is a control step for receiving and controlling payment method selection from the user in the duration of money amount inputting of products, and details thereof will be described later with reference to Figures 10 and 11. The read information display control (step S813) is a control step in which information (including checkout information) of each product read by the cash register terminal is displayed on the user display device (for example, step S714a in Figure 7). In an embodiment of the present invention, the read information display control may be executed as part of the payment method preselection control.

At step S805, the cash register terminal determines whether to end product reading. In an embodiment, the determination is performed based on, for example, whether the store clerk has pressed a reading end button of the cash register terminal. When product reading is to be ended (Yes at step S805), the process proceeds to step S806. When product reading is not to be ended (No at step S805), the process returns to step S804 and continues the product reading control.

At step S806, the cash register terminal checks a payment method with the customer or a customer terminal. In an embodiment, the store clerk orally asks the customer for the payment method check. Alternatively, in a case in which a payment method is selected in advance by the payment method preselection control (step S812), the selected payment method may be applied.

At step S807, the cash register terminal executes payment processing. In an embodiment, the payment processing is executed when the store clerk presses the pay button on the cash register terminal. Alternatively, in a case in which the two-dimensional payment is already selected as a payment method by the payment method preselection control (step S812), the payment processing may be executed when the user presses the pay button (920 in Figure 9) by using the user terminal. In an embodiment, at execution of the payment processing, the cash register terminal transmits payment information to the payment management server for POS use.

At step S808 in Figure 8, the cash register terminal transmits a file of an electronic receipt to the user terminal (corresponding to step S723 in Figure 7).

### (Exemplary user terminal screen at payment)

Figure 9 illustrates an exemplary display screen of a user terminal 900 when payment is made by using the user terminal in an embodiment of the present invention. Similarly to the example illustrated in Figure 4, the user terminal 900 includes a casing unit 901, a display 902, and a hardware button 903. Characters and numbers such as shop information 910, date and time 911, a product name 912, a price 913, and a total money amount 914 are displayed on the screen of Figure 9.

The screen of Figure 9 includes a payment execution button 920 that commands execution of payment when operated by the user, and a use-point button 921 that commands use of points when operated by the user. When payment is to be executed with the contents of display on the screen, the user presses the payment execution button 920. As described above, in an embodiment of the present invention, payment using the user terminal is performed by using a payment method (electronic money or credit card) set in advance. When the use-point button 921 is pressed, a use point setting screen (not illustrated) is displayed, and on the screen, the user can optionally designate and input points to be used (all or some points).

In an embodiment of the present invention, a non-illustrated payment method selection (change) button may be provided in addition to the payment execution button 920 and the use-point button 921 in Figure 9. In an embodiment of the present invention, when the payment method selection (change) button is pressed down, transition is made to a non-illustrated selection or change screen, and various kinds of payment method selection or change such as change from the two-dimensional payment to credit payment (or vice versa) and change from a currently selected payment method to cash payment can be instructed and inputted.

The existence of the payment method selection (change) button facilitates understanding that a payment method can be changed after total money amount confirmation or right after payment processing start.

### (Payment method preselection example)

Figure 10 illustrates a detailed operation processing flowchart of the payment method preselection control (step S812 in Figure 8) in an embodiment of the present invention. As described above, the payment method preselection control (hereinafter also referred to as "preselection control") is control for selection (or selection including change; hereinafter simply referred to as selection) of a payment method by the user in the duration of money amount inputting of products. When the preselection control is started, the cash register terminal displays a two-dimensional code on the customer side display (203 in Figure 2) at step S1001.

Figure 11 illustrates an exemplary display screen of a customer side display 1100 in an embodiment of the present invention. The customer side display 1100 corresponds to the customer side display 203 in Figure 2 and includes a casing unit 1101 and a display unit 1102 in an embodiment. The screen of Figure 11 is displayed in the duration of money amount inputting of products and includes date and time 1110, a name 1111 and a price 1112 of each input product, a two-dimensional code 1113, and a message 1114 for the two-dimensional code as illustrated in the drawing. In an embodiment, the message 1114 has a content "please read a code on the right for two-dimensional payment" and includes explanation related to payment method selection as necessary.

As described above for steps S709b to S713b in Figure 7, when the two-dimensional code is read by the user through the user terminal in a state (Figure 11) in which the two-dimensional code is displayed on the customer side display, the user terminal transmits a start request command for the additional service processing (payment scheme selection) to the cash register terminal (step S710b in Figure 7). Thus, the cash register terminal can determine that the two-dimensional code is read by the user terminal upon reception of the start request command from the user terminal.

Subsequently, the process returns to Figure 10 and proceeds to step S1002 where it is determined whether the two-dimensional code is read. When the two-dimensional code is read (Yes at step S1002 in Figure 10), the cash register terminal executes authentication processing that performs authentication of the user terminal (step S1003). Specifically, having received the start request command, the cash register terminal transmits an authentication request command including identification information (user terminal ID) and authentication information of the user terminal, which are included in the start request command, to the payment management server and checks whether the additional service processing is allowed to be performed with the cash register terminal (corresponding to step S711b in Figure 7). Having received the authentication request command, the payment management server performs authentication by using the user terminal ID, the authentication information, and the like included in the authentication request command and determines whether the additional service processing is allowed to be performed with the cash register terminal (corresponding to step S712b in Figure 7). Then, the payment management server transmits a result of the determination to the cash register terminal (corresponding to step S713b in Figure 7).

When a flag indicating the result of the determination has a value (for example, "1") indicating "additional service start OK", the authentication is successful and thus the cash register terminal ends the authentication processing. Note that, when the flag indicating the result of the determination has a value (for example, "0") indicating "additional service start impossible", the authentication is unsuccessful and thus the cash register terminal performs predetermined error processing.

When the authentication is successful and the authentication processing (step S1003 in Figure 10) is ended, the cash register terminal selects the two-dimensional payment as a payment method in an embodiment. The two-dimensional payment is payment through a two-dimensional code (a two-dimensional code displayed on the customer side display of the cash register terminal or a two-dimensional code 1221 in Figure 12) and means payment using the user terminal. In an embodiment, when the two-dimensional code displayed on the customer side display of the cash register terminal for the two-dimensional payment is read by the user terminal, the screen on the user terminal transitions to a non-illustrated payment page so that the payment processing can be performed through a predetermined procedure. This form is called a merchant presented mode (MPM).

Then, the cash register terminal executes the above-described read information display control (step S1005). The read information display control at step S1005 is same as the read information display control at step S813 in Figure 8. As described above, the read information display control is control to display information (including checkout information) of each product read by the cash register terminal on the display of the user terminal (user display device such as 401 in Figure 4). The screen illustrated in Figure 12 may be used as a screen displayed on the user terminal along with the read information display control by the cash register terminal.

Figure 12 illustrates an exemplary display screen displayed on a user terminal 1200 in the duration of money amount inputting of products at the cash register terminal in an embodiment of the present invention. Similarly to the example illustrated in Figure 9, the user terminal 1200 includes a casing unit 1201, a display 1202, and a hardware button 1203. Characters such as shop information 1210, date and time 1211, a product name 1212, and a price 1213 are displayed on the screen of Figure 12. Since the read information display control is performed in the duration of money amount inputting of products, no button corresponding to the payment execution button 920 in Figure 9 is displayed. Read products of product C and the following products are sequentially displayed on the display 1202 in real time in effect.

However, since use point setting is possible in the duration of money amount inputting of products, a use-point button 1220 can be displayed. Note that, in Figure 12, a payment method selection button may be provided in place of a payment execution button to allow payment method selection. Although all information is displayed on a single screen in the example of Figure 12, the screen may be configured scrollable when a large number of products are input and the product name 1212, the price 1213, and the like cannot be displayed on a single screen.

The two-dimensional code 1221 is a code for two-dimensional payment. The code 1221 may be not displayed in the duration of money amount inputting of products. In an embodiment, the payment processing is completed when the two-dimensional code 1221 is read by a reader on the POS cash register terminal side after total money amount calculation ends. This form is called a consumer presented mode (CPM).

At step S1006 in Figure 10, the cash register terminal determines whether a point use request is made by the user. In an embodiment, the determination may be performed based on, for example, whether the use-point button 1220 (Figure 12) is pressed and points to be used are notified by the user terminal. When the point use request is made (Yes at step S1006), at step S1007, the cash register terminal receives inputting of points to be used. The received points to be used are used at payment. When no point use request is made (No at step S1006), the process proceeds to step S1008.

At step S1008, the cash register terminal determines whether product inputting has ended. In an embodiment, the determination may be performed, based on, for example, whether the input completion button (not illustrated) at the cash register terminal is pressed. When product inputting has ended (Yes at step S1008), the current payment method preselection control is ended (step S1009). When product inputting has not ended but in the duration of money amount inputting (No at step S1008), the process returns to step S1005.

According to the above description, in an embodiment of the present invention, a payment method can be selected by using an input unit (operation input device such as 501 in Figure 5) of a user terminal (such as 500 in Figure 5) in the duration of money amount inputting of products at a cash register terminal (such as 12a in Figure 1) (for example, step S710b in Figure 7 and step S1004 in Figure 10). Thus, it is possible to select a payment method at an optional timing on the user side, which improves freedom of the user.

In an embodiment of the present invention, when a payment method is selected through an input unit (operation input device such as 501 in Figure 5) of a user terminal (such as 500 in Figure 5) in the duration of money amount inputting of products at a cash register terminal (such as 12a in Figure 1), a central processing unit (user control device such as 503 in Figure 5) of the user terminal receives information of each input product from the cash register terminal and displays the received information on a display (user display device such as 402 in Figure 4) (step S715 in Figure 7, step S1005 in Figure 10, or Figure 12).

According to the present embodiment, information of each input product can be displayed on the display of a user terminal in the duration of money amount inputting of products at a cash register terminal. Thus, the user can freely check information of each input product, for example, when the user has missed display on the cash register terminal (including a case in which the user desires to go back and view), when the cash register terminal has no display device (such as the customer side display 203 in Figure 2) facing the user, when the same product is wrongly input twice, when discount to be applied is not applied, when the cash register terminal has a customer side display but with an insufficient number of displayed lines, or when the user desires check any product, the money amount of which is already input, by back scroll or the like. This improves freedom of the user.

Since information of each input product is displayed on the display of the user terminal at a timing when a two-dimensional code is read (at a timing when a payment method is selected), it is possible to start product information display without discomfort felt by the user.

In an embodiment of the present invention, product information displayed on a display (user display device such as 402 in Figure 4) in the duration of money amount inputting of products at a cash register terminal (such as 12a in Figure 1) includes information of all input products (Figure 12). Accordingly, the user can check information of an optional product when desiring to go back and view information of input products.

In an embodiment of the present invention, a communication interface unit (user communication device such as 506 in Figure 5) of a user terminal (such as 500 in Figure 5) receives information of each input product through bilateral wireless communication with a communication interface unit (cash register communication device such as 306 in Figure 3) of a cash register terminal (such as 300 in Figure 3) (step S714a in Figure 7 or S1005 in Figure 10). However, the present invention is not limited thereto, but the user terminal may communicate with a payment management server (such as 11 in Figure 1) through the cash register terminal, communicate with the cash register terminal through the payment management server (group), or directly communicate with the payment management server (such as 11 in Figure 1), and may display information of each input product on a display (user display device such as 402 in Figure 4).

### (Variations)

In each above-described embodiment, a bar code reader is used for product inputting (reading), but a method of recognizing a product based on a camera image or a method of inputting a product by using an IC tag or the like may be employed.

Transmission of product information from a cash register terminal to a user terminal may be directly performed between both members (through bilateral communication) or may be indirectly performed (through a public network).

In a case in which communication is started between the cash register terminal and the user terminal, the user terminal directly starts communication with the cash register terminal (for example, step S710a in Figure 7 and step S1002 in Figure 10), but at start of communication, the user terminal may first communicate with the payment management server (transmits a start request command for the additional service processing) and then the payment management server may command the cash register terminal to start communication with the user terminal, thereby starting communication between the cash register terminal and the user terminal.

Reading of a two-dimensional code by the user terminal means selection of the two-dimensional payment as a payment method by the user (for example, steps S1002 and S1004 in Figure 10), but a non-illustrated payment method selection screen may be displayed on the user terminal after reading of a two-dimensional code, thereby allowing the user to select an optional payment method.

Change of a payment method and/or display of product information on the user terminal may be triggered by reading of a two-dimensional code or may be triggered by other code reading, a user input operation, or the like. The triggers for change of a payment method and display of product information on the user terminal may be different (for example, reading of different two-dimensional codes).

Change of a payment method is notified to the cash register terminal at a timing when a two-dimensional code is read by the user terminal (for example, step S1004 in Figure 10), but the notification may be made from the user terminal to the cash register terminal at a timing when payment is actually made.

Although an embodiment of a payment system, for example, is described above based on specific examples, the embodiment of the present invention includes aspects as a method or computer program for achieving a system or a device as well as a storage medium (such as an optical disk, a magneto optical disc, a CD-ROM, a CD-R, a CD-RW, a magnetic tape, a hard disk, or a memory card) in which the computer program is recorded.

The form of implementation of the computer program is not limited to an application program such as an object code compiled by a compiler or a program code executed by an interpreter but may be, for example, the form of a program module incorporated in an operating system.

Moreover, not all pieces of processing of the computer program necessarily need to be performed only by a CPU on a control board but part or all thereof may be performed by another processing unit (such as DSP) mounted on an extension board or extension unit added to the board as necessary.

All constituent components written in the present specification (including the claims, the abstract, and the drawings) and/or all disclosed methods or all processing steps may be combined in an optional combination except for any combination in which characteristics thereof are mutually exclusive.

Each characteristic written in the present specification (including the claims, the abstract, and the drawings) may be replaced with an alternative characteristic intended for the same purpose, an equivalent purpose, or a similar purpose unless explicitly stated otherwise. Thus, each disclosed characteristic is a comprehensive example of a series of identical or equivalent characteristics unless explicitly stated otherwise.

The present invention is not limited to any specific configuration in each above-described embodiment. The present invention may be extended to all new characteristics written in the present specification (including the claims, the abstract, and the drawings) or combinations thereof or to all written new methods or processing steps or combinations thereof.

### Reference Signs List

10 payment system
11 payment management server (group)
12a to 12c cash register terminal
13a to 13c payment-purpose user terminal (user terminals such as smartphones; information processing devices)
19 public network (for example, dedicated line or the Internet)
203 customer side display (cash register display device)
301 input unit (product input device)
303 central processing unit (payment information calculation device, cash register control device)
306 communication interface unit (cash register communication device)
501 input unit (operation input device)
503 central processing unit (user control device)
506 communication interface unit (user communication device)

## Claims

1. A payment-purpose user terminal capable of communicating payment information with a cash register terminal that is connectable to a server, the payment-purpose user terminal comprising:
an operation input device configured to receive an operation input by a user;
a user communication device configured to communicate with the server or the cash register terminal; and
a user control device configured to control the operation input device and the user communication device,
wherein the user control device receives selection of a payment method through the operation input device in duration of money amount inputting of products at the cash register terminal.

2. The payment-purpose user terminal according to claim 1, wherein, when the payment method is selected through the operation input device in the duration of money amount inputting of products at the cash register terminal, the user control device receives information of each input product:
(1) from the cash register terminal;
(2) from the server through the cash register terminal; or
(3) from the server, and
displays the received information on the user display device.

3. The payment-purpose user terminal according to claim 2, wherein product information displayed on the user display device in the duration of money amount inputting of products at the cash register terminal includes information of all input products.

4. The payment-purpose user terminal according to claim 2 or 3, wherein the user communication device receives information of each input product:
(1) through communication with a cash register communication device of the cash register terminal;
(2) through communication with the server through the cash register terminal; or
(3) through communication with the server.

5. A payment-purpose user terminal capable of communicating payment information with a cash register terminal that is connectable to a server, the payment-purpose user terminal comprising:
an operation input device configured to receive an operation input by a user;
a user communication device configured to communicate with the server or the cash register terminal; and
a user control device configured to control the operation input device and the user communication device,
wherein, in the duration of money amount inputting of products at the cash register terminal, the user control device receives information of each input product from the server or the cash register terminal and displays the received information on the user display device.

6. A payment system comprising:
a cash register terminal that is connectable to a server; and
a payment-purpose user terminal, wherein
the cash register terminal includes
a product input device configured to individually input a product bought by a user,
a payment information calculation device configured to calculate a total amount by adding a price of each input product,
a cash register communication device configured to communicate with the payment-purpose user terminal,
a cash register display device disposed toward the user, and
a cash register control device configured to control the product input device, the payment information calculation device, the cash register communication device, and the cash register display device,
the payment-purpose user terminal includes
an operation input device configured to receive an operation input by the user,
a user communication device configured to communicate with the server or the cash register communication device, and
a user control device configured to control the operation input device and the user communication device, and
the user control device receives selection of a payment method through the operation input device and notifies the server or the cash register terminal of the selection in duration of money amount inputting of products at the cash register terminal.

7. A computer program configured to operate on a payment-purpose user terminal including an operation input device, a user communication device, and a user control device and capable of communicating payment information with a cash register terminal, the operation input device being configured to receive an operation input by a user, the user communication device being configured to communicate with the cash register terminal, the user control device being configured to control the operation input device and the user communication device,
wherein the user control device executes a step of receiving selection of a payment method through the operation input device in duration of money amount inputting of products at the cash register terminal.

8. A computer program configured to operate on a payment system comprising:
a cash register terminal including a product input device, a payment information calculation device, a cash register communication device, a cash register display device, and a cash register control device, the product input device being configured to individually input a product bought by a user, the payment information calculation device being configured to calculate a total amount by adding a price of each input product, the cash register communication device being configured to communicate with a payment-purpose user terminal, the cash register display device being disposed toward the user, the cash register control device being configured to control the product input device, the payment information calculation device, the cash register communication device, and the cash register display device; and
a payment-purpose user terminal including an operation input device, a user communication device, and a user control device, the operation input device being configured to receive an operation input by the user, the user communication device being configured to communicate with the cash register communication device, the user control device being configured to control the operation input device and the user communication device,
wherein the user control device executes a step of receiving selection of a payment method through the operation input device in duration of money amount inputting of products at the cash register terminal.
